Europäisches Patentamt

European Patent Office

Office européen des brevets

(11) Publication number: **0 227 872**
**A1**

# EUROPEAN PATENT APPLICATION

(21) Application number: 86100012.3

(51) Int. Cl.⁴: **H02J 3/26**

(22) Date of filing: 02.01.86

(43) Date of publication of application:
08.07.87 Bulletin 87/28

(84) Designated Contracting States:
AT DE FR GB IT

(71) Applicant: **Biuro Projektow i Dostaw Inwestycyjnych "METALCHEM"**
**ul. Okrzei 20**
**PL-44-101 Gliwice(PL)**
Applicant: **Politechnika Slaska im. Wincentego Pstrowskiego**
**ul. Katowicka 7**
**Gliwice(PL)**

(72) Inventor: **Baron, Bernard**
**ul. Kokoszki 6/46**
**Gliwice(PL)**
Inventor: **Nowomiejski, Zygmunt**
**Karolinki 21**
**Gliwice(PL)**
Inventor: **Smok, Jerzy**
**Rozdzinskiego 88/159**
**Katowice(PL)**
Inventor: **Machnik, Franciszek**
**ul. Kochanowskiego 29a/21**
**Gliwice(PL)**
Inventor: **Bilik, Janusz**
**ul. Krucza 8A/9**
**Gliwice(PL)**
Inventor: **Maczynski, Andrzej**
**ul. Andromedy 4/6**
**Gliwice(PL)**
Inventor: **Bradecki, Jerzy**
**ul. Findera 16/20**
**Gliwice(PL)**
Inventor: **Smolinski, Józef**
**ul. 1-go Maja 15**
**Chorzów(PL)**

(74) Representative: Ebbinghaus, Dieter et al
v. FÜNER, EBBINGHAUS, FINCK
Patentanwälte European Patent Attorneys
Mariahilfplatz 2 & 3
D-8000 München 90(DE)

(54) **A method and system for compensating the electromotive forces of self-induction and mutual induction in a conventional asymmetric high current line.**

(57) The method involves applying an additional voltage forced by line currents of the magnitude

$$-u_k = (2+10)\ L_k \frac{di_k}{dt} + \sum_{k \neq l=1}^{3} M_{kl} \frac{di_l}{dt}$$

to each line phase in series close to the supply transformer.

It is sufficient to refer the phase current derivatives to the basic harmonic of that current.

The system consists of three transformers ($T_r$), the primary sides whereof being series-connected to the individual phases ($F_1$, $F_2$, $F_3$) of the high-current line and the secondary sides whereof being series-interconnected by means of three four-poles ($C_{12}$, $C_{13}$, $C_{23}$), preferably of the $\Gamma$ type, an isolating transformer ($T_s$) being placed between any two four-poles.

# A METHOD AND SYSTEM FOR COMPENSATING THE ELECTROMOTIVE FORCES OF SELF-INDUCTION AND MUTUAL INDUCTION IN A CONVENTIONAL ASYMMETRIC HIGH-CURRENT LINE

The invention relates to a method and to a system for compensating the electromotive forces of self-induction and mutual induction in a conventional asymmetric high-current line supply, for example, to an arc furnace or to a resistance arc furnace.

The asymmetry of self-induction and mutual induction causes an asymmetry of the power and phase currents of a load supplied by the line. Process considerations of the operation of the load and power considerations cause a trend to obtaining power and phase current symmetry.

A method is known for attaining the complete symmetry of power and phase currents in a high-current line. It requires the application of a bifilar line having a symmetric construction and supplied by three-phase transformers symmetrically arranged around the load. This leads to an increase in investment costs by an increase in the number of high-power transformers and limits the application due to the area required for their installation.

Due to the above reasons, use is generally made of a high-current line supplied by one transformer in whose phases electromotive forces of self-induction and mutual induction are induced due to line asymmetry, those forces causing the asymmetry of power and phase currents. The asymmetry causes a disturbance in the operation of the load and power losses.

Due to the above reasons, a number of methods are used for decreasing the asymmetry of power and phase currents, f.i. a bifilar line in the delta and star system as known from the Polish Patent Specification No. 44 602, a high-current line compensated by an additional short-circuited line as known from Polish patent specification no. 55 587, a high-current line with short-circuited windings, and a high-current line with "mixed" cables of various phases.

Such implementations of the method of compensating inductive voltage drops in an asymmetric high-current line partially decrease the reactance of lines and the asymmetry of power and phase curents. However, this is attained with a considerable increase of the resistance and requires the application of lines of complicated designs. Another known method of compensating inductive voltages in an asymmetric high-current line involves a local series application to each phase an additional voltage being part of the supply voltage of that phase. This method is implemented by special transformer systems enabling the individual regulation of the secondary voltage of each of the phases of the supply transformer which, however, does not allow the simultaneous symmetry of currents and phase powers to be obtained.

In order to avoid these and other drawbacks of the prior art, the method of this invention for compensating the electromotive forces of self-induction or mutual induction in a conventional asymmetric high-current line involves the application of an additional voltage, $u_k$, forced with line currents of the magnitude

$$-u_k = (2+10)L_k \frac{di_k}{dt} + \sum_{k \neq l = 1}^{3} M_{kl} \frac{di_l}{dt}$$

where:

$L_k$ is the self-induction of phase k,

$\frac{di_k}{dt}$ and $\frac{di_l}{dt}$ are line phase current derivatives,

l is the index of the phases acting on phase k,

$M_{kl}$ is the mutual induction of phases k and l,

that additional voltage being applied to each phase k (k = 1, 2 and 3) in series close to the supply transformer.

It is practically sufficient that the phase current derivatives are those of the basic harmonic of that current.

The method as per this present invention practically allows the reactance to be fully eliminated, thereby attaining the symmetry of power and phase currents in an asymmetric high-current line supplying an arc furnace or a resistance arc furnace. It also allows the consumption of reactive power to be decreased, which is essential due to the utilisation of connected power, and a decrease in the investment and operating costs of the loads.

A system as per the present invention for compensating the electromotive forces of the self-induction and mutual induction of a conventional asymmetric high-current line is composed of three transformers, the primary sides whereof being series -connected to the individual phases of the high-current line, and secondary sides whereof being inter connected in series with reactive four-poles, preferably of the Γ type, and an isolating transformer being placed between two four-poles.

The forced phase currents resulting from the supply voltage, from the line parameters and from the load parameters flow through the primary windings of the transformers. The parameters of the reactantive four-poles are so matched that voltage, $u_k$, compensating the inductive voltage drops should appear in the primary windings with the current forced. The isolating transformer ensures the regularity of the armature connections.

The system as per the present invention is simple and can be used in conventional simple structures of asymmetric high-current lines.

The invention will be further explained with reference to an embodiment of a system for compensating the electromotive forces of self-induction and mutual induction of a conventional asymmetric high-current line, as shown in the attached diagram.

The primary sides of transformers $T_r$ are series connected to the individual phases $F_k$ ($F_1$, $F_2$ and $F_3$) of a high current line whereby an arc furnace or a resistance arc furnace 1 is supplied; forced currents $i_k$ ($i_1$, $i_2$ and $i_3$) flow through the respective primary windings.

The inputs of reactance four-poles $C_{12}$ and $C_{13}$ are series-connected to the secondary side of transformer $T_r$ in the first phase $F_1$.

The output of the four-pole $C_{13}$ is connected to one winding of an isolating transformer $T_s$. Reactantive four-poles, $C_{12}$ and $C_{23}$, are series-connected to the secondary side of transformer $T_r$ in the second phase $F_2$.

The output of the four-pole $C_{23}$ is series-connected to the secondary side of the transformer $T_r$ in the third phase $F_3$ and to the second winding of the isolating transformer $T_s$.

The parameters of the four-poles $C_{12}$, $C_{13}$ and $C_{23}$ should be matched in four-pole type, line parameters and load type, so that the voltages $u_k$ ($u_1$, $u_2$ and $u_3$) appearing on the primary windings of transformers $T_r$ should compensate the voltage drops in appropriate line phases.

These voltages are as follows:

$$-u_k = (2+10)L_k \frac{di_k}{dt} + \sum_{\substack{k \neq l = 1}}^{3} M_{kl} \frac{di_l}{dt}$$

the factor at the first term of the sum varying within 6-10 for resistance arc furnaces in a kind of carbide furnaces.

The isolating transformer $T_s$ ensures the regularity of the connections of the four-poles $C_{12}$, $C_{13}$ and $C_{23}$.


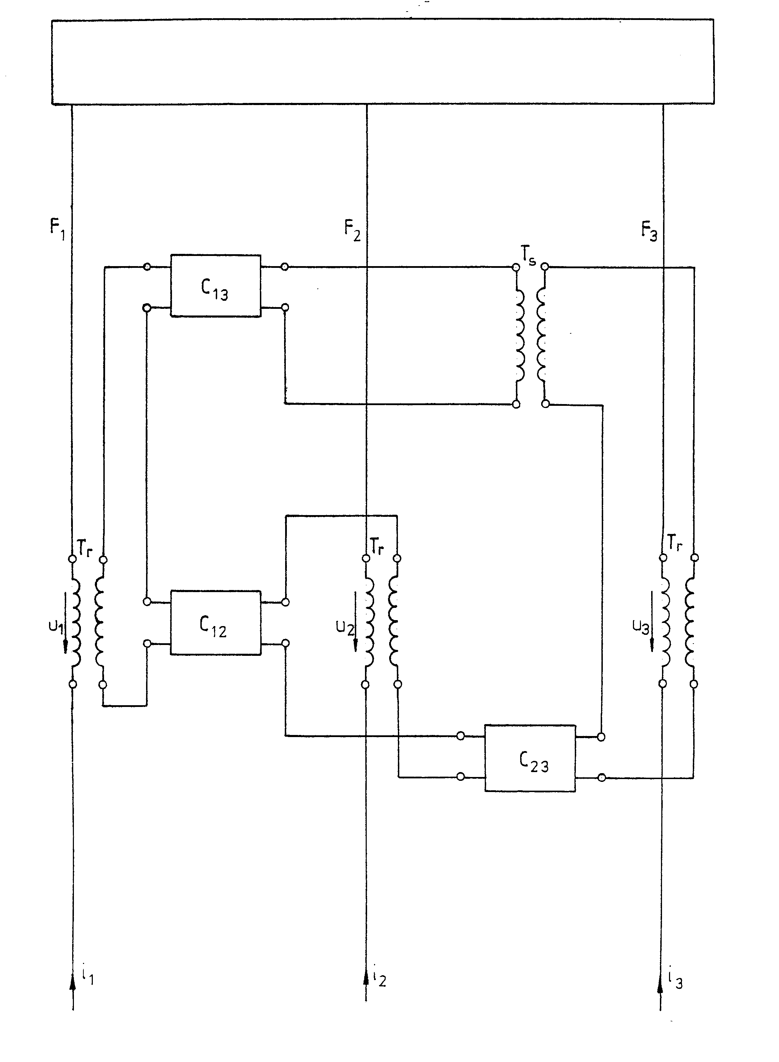

**Claims**

1. A method of compensating the electromotive forces of self-induction and mutual induction of an asymmetric high-current line, **characterized** in that additional voltage $u_k$ forced with line currents of the magnitude

$$-u_k = (2+10) L_k \frac{di_k}{dt} + \sum_{\substack{k \neq l = 1}}^{3} M_{kl} \frac{di_l}{dt}$$

where:

$L_k$ is the self-induction factor of phase k,

$\frac{di_k}{dt}$ and $\frac{di_l}{dt}$ are the derivatives of line phase current,

l is the mutual induction factor of phases k and l,

$M_{kl}$ are the mutual induction factors of phases k and l, is applied in series near the supply transformer to each phase k (k = 1, 2 and 3).

2. A compensating method as per claim 1, **characterized** in that the phase current derivatives are those of the basic harmonic of that current.

3. A system for compensating the electromotive forces of self-induction and mutual induction of an asymmetric high-current line, **characterized** by three transformers ($T_r$) the primary windings whereof being series-connected to the individual phases ($F_1$, $F_2$, $F_3$) of the high-current line and the secondary sides whereof being series-connected by means of reactantive four-poles ($C_{12}$, $C_{13}$, $C_{23}$), an isolating transformer - ($T_s$) being placed between any two four-poles.

4. A compensating system as per claim 2, **characterized** in that the reactantive four-poles ($C_{12}$, $C_{13}$, $C_{23}$) are of the $\Gamma$ type.

EPAB-33465.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | FR-A-1 099 455 (ASEA) <br> * Whole document * | 1 | H 02 J 3/26 |
| | --- | | |
| A | DE-B-1 159 111 (SIEMENS) <br> * Claim 1; figure 2 * | 1 | |
| | --- | | |
| A | FR-A-2 391 584 (SUNSTRAND) <br> * Claim 1; figure 2 * | 1 | |
| | --- | | |
| A | US-A-3 176 214 (LEAR SIEGLER) <br> * Figure 4 * | 3 | |
| | --- | | |
| A | DE-A-3 242 426 (SCHABMÜLLER) <br> * Abstract; figure 1 * | 1 | |
| | ----- | | |

|  | TECHNICAL FIELDS SEARCHED (Int. Cl.4) |
|---|---|
| | H 02 J 3/00 <br> G 05 F 1/00 |

The present search report has been drawn up for all claims

| Place of search | Date of completion of the search | Examiner |
|---|---|---|
| THE HAGUE | 02-09-1986 | ZAEGEL B.C. |